# EUROPÄISCHE PATENTSCHRIFT

(11) **EP 0 363 955 B1**
(45) Veröffentlichungstag und Bekanntmachung des Hinweises auf die Patenterteilung: **14.12.1994**
(21) Anmeldenummer: 89118978.9
(22) Anmeldetag: 12.10.1989
(51) Int. Cl.: B23B 31/16, B23B 5/16

(54) **Vorrichtung zum Spannen sowie zum Drehen von rohrförmigen Werkstücken in einer Werkzeugmaschine**
Device for clamping and rotating tubular work pieces in a machine tool
Dispositif de serrage et de rotation de pièces tubulaires dans une machine-outil

(30) Priorität: 14.10.1988 IT 2201888 U
(43) Veröffentlichungstag der Anmeldung: 18.04.1990
(73) Patentinhaber: SALA S.p.A., I-38056 Levico (IT)
(72) Erfinder: Mosca, Claudio, I-38056 Levico (IT)
(74) Vertreter: Mayer, Hans Benno, Dipl.-Ing.

(56) Entgegenhaltungen:
- DE-A- 2 256 190
- DE-A- 3 218 083

## Beschreibung

Die vorstehende Erfindung betrifft eine Vorrichtung zum Spannen und Drehen von rohrfoermigen Werkstuecken in einer Werkzeugmaschine gemäß dem Oberbegriff des Anspruchs 1 (siehe z.B. Prospekte der Firma CMT, Bologna).

Zum Trennen von Rohren finden heute verschiedene Verfahren Anwendung.

In letzter Zeit wurden zum Trennen von Rohren Lasereinrichtungen und aehnliche Verfahren vorgeschlagen. Bei diesen Vorrichtungen wird der Trennvorgang unter Verwendung eines Lichtstrahles vorgenommen. Durch den Laserstrahl werden Stuecke eines sich drehenden Rohres abgetrennt. Es ist notwendig in der Vorrichtung, rohrfoermige Werkstuecke mit unterschiedlichem Durchmesser mit der erforderlichen Sicherheit, aber auch Feinfuehligkeit zu spannen, um waehrend des Schneidvorganges des rohrfoermigen Werkstueckes, diesem eine gesteuerte Drehbewegung zu verleihen.

Aus der Offenlegungsschrift DE-A-22.56.190 ist eine Einrichtung zur Steuerung der Kraftuebertragung auf die Spannzange einer Mehrspindeldrehmaschine bekannt geworden.

Die Betaetigung der Spannzange wird ueber eine Kolben-Zylindereinheit vorgenommen, die ueber eine angetriebene Stange auf die Spannzange einwirkt. Dabei durchdringt die Antriebsstange die Maschinenspindel in Laengsrichtung.

Es ist bei dieser bekannten Ausfuehrungsform einer Spannvorrichtung nicht moeglich, einen von Bauteilen freien Spindeldurchgang zu schaffen. Dies schliesst die Moeglichkeit aus, von der Rueckseite der Spannvorrichtung oder der Spindel her das Anfangsstueck langer, zu bearbeitender Rohre einschieben zu koennen.

Einem vorveroeffentlichten Katalog der Firma CMT, Costruzioni Meccaniche Tubertini, Bologna, kann der sachkundige Fachmann entnehmen, wie die Oeffnungsbewegung der Spannbacken eines Spannfutters zu begrenzen ist, indem ein fester Anschlag vorgesehen wird, der einer Endstellung eines Antriebskolbens entspricht.

Der Fachmann kann dieser Vorveroeffentlichung aber nicht entnehmen, wie eine feinfuehlige Einstellung der Schliessbewegung des Spannfutters und somit der zu uebertragenden Spannkraft festlegbar ist, um auch duennwandige Rohre spannen zu koennen, ohne durch den Schliessdruck der Backen eine Beschaedigung oder ein unerwuenschtes Verbiegen der Rohrwandung hervorzurufen.

Auf der Grundlage der Vorveroeffentlichung CMT, musste der Fachmann das bekannte Spannfutter weiterentwickeln, um die Moeglichkeit zu schaffen, Rohre mit erheblicher Laenge und sehr duenner Rohrwandung in Drehbewegung versetzen zu koennen, ohne beim Spannvorgang eine Beschaedigung oder Verformung des Rohres hervorzurufen.

Es ist Aufgabe der vorstehenden Erfindung, eine Vorrichtung vorzuschlagen, die ein feinfuehliges Spannen des Rohres ohne jegliche Verformung der Rohrwand ermoeglicht und es erlaubt, sowohl Rohre mit kleinem Durchmesser als auch Rohre mit grossem Durchmesser zu spannen und ein sicheres Einfuehren des Rohres in die Spannvorrichtung zu gestatten und gleichzeitig einen Drehantrieb zum Antreiben des Rohrstueckes mit der gewuenschten Geschwindigkeit zur Durchfuehrung des Schneidvorganges zu ermoeglichen.

Diese Aufgabe wird erfindungsgemaess bei einer gattungsgemäßen Vorrichtung zum Spannen und Drehen rohrfoermiger Werkstuecke in einer Werkzeugmaschine dadurch erreicht, dass dem Kolben eine in Laengsrichtung verstellbare Ringmutter als einstellbarer Anschlag zur Festlegung der maximalen Schliessbewegung zugeordnet ist, und die Mutter ueber einen Zahnkranz mit einer antreibbaren Gewindespindel und ueber ein Gewinde mit dem Zylindergehaeuse in Wirkverbindung steht.

Mit einer derartigen Vorrichtung wird ein Mittel zum sicheren Spannen von Rohrstuecken geschaffen. Es koennen sowohl duennwandige als auch dickwandige Rohre einwandfrei gespannt werden, da der Hub der Spannbacken und somit die auf die Rohrwandung ausgeuebte Druckkraft festgelegt und genau eingestellt werden kann. Die Vorrichtung erlaubt ein Spannen von Rohren mit kleinem Durchmesser als auch ein Spannen von Rohren mit grossem Durchmesser und es ist moeglich, dem Rohr unterschiedliche Drehgeschwindigkeiten, entsprechend vorgeschriebenen Schnittparametern, zu verleihen.

Ein Ausführungsbeispiel der Erfindung wird nun genauer beschrieben und anhand des Ausfuehrungsbeispieles in den Zeichnungen dargestellt. Es zeigen:
Fig. 1 die ausgeführte Spann- und Drehvorrichtung im Schnitt;

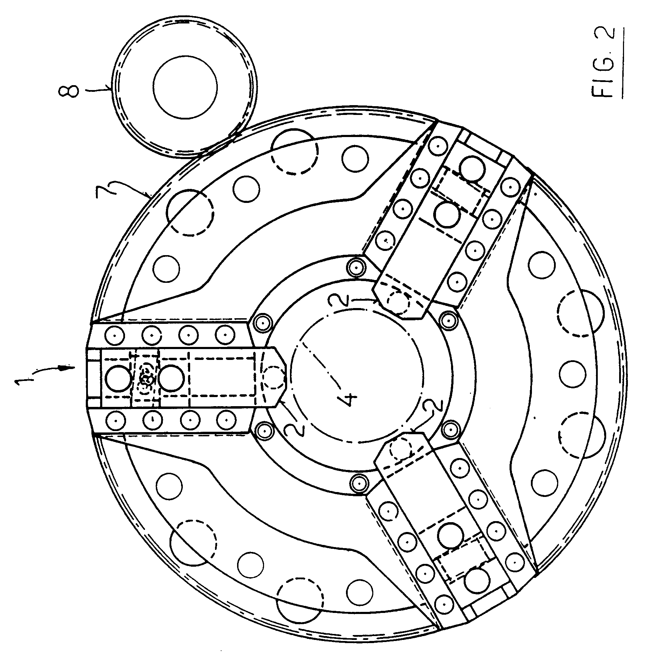

Fig. 2 eine Vorderansicht der ausgeführten Spanneinrichtung; und

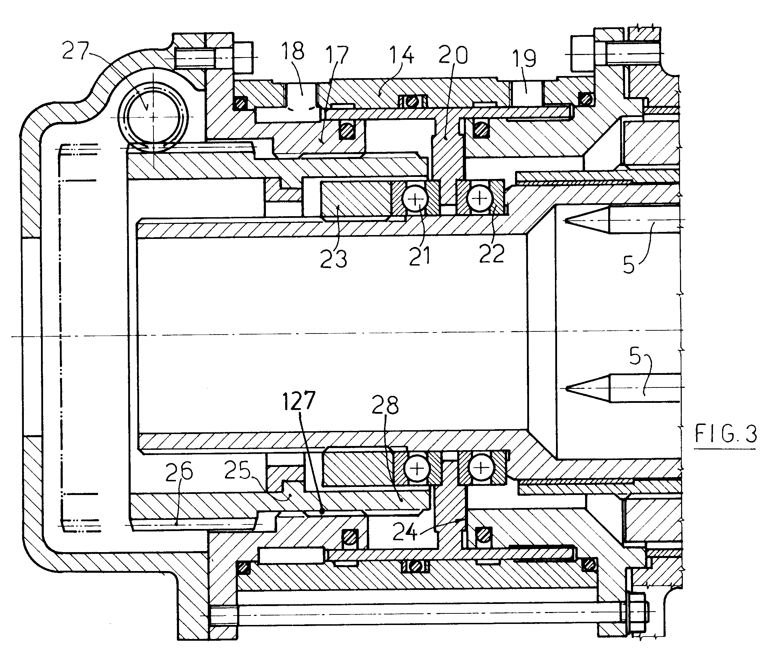

Fig. 3 ein Detail in des rueckwaertigen Teiles der Spann- und Drehvorrichtung im Schnitt.

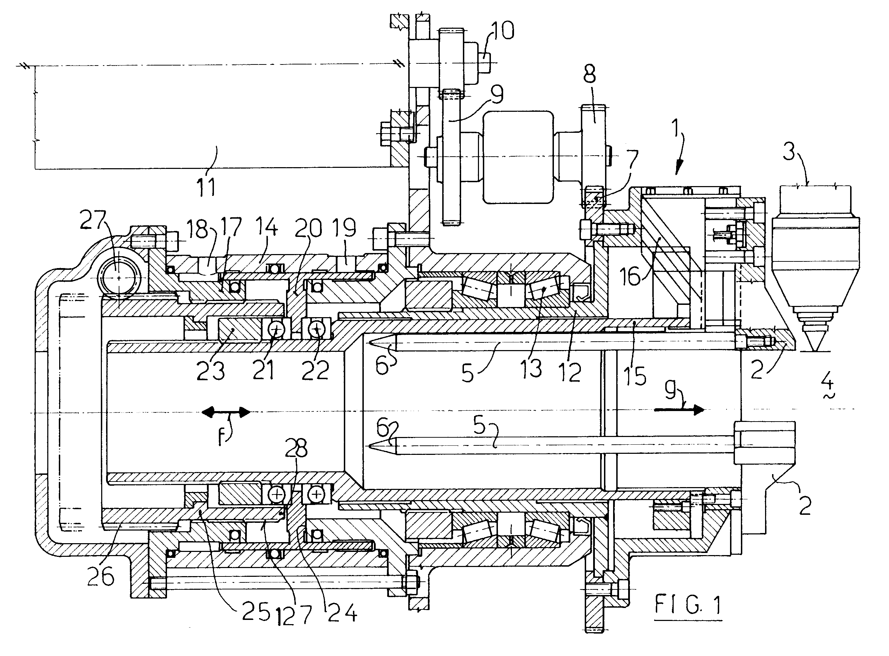

Wie der Fig. 1 zu entnehmen ist, besteht die Spannvorrichtung aus einem an sich bekannten Spannfutter 1, das mit Spannbacken 2, wie diese z. B. bei Drehmaschinen ueblich sind, ausgeruestet ist.

Vor den Spannbacken 2 des Futters 1 ist eine mit einem Laserstrahl arbeitende Schneidvorrichtung 3 angeordnet. Die Spannbacken 2 haben die Aufgabe, das Rohr 4 im Futter zu spannen. In vorteilhafter Weise tragen die Spannbacken 2 im Inneren der Vorrichtung 1 Fuehrungsstangen 5. Diese Fuehrungsstangen 5 weisen zugespitzte Enden 6 auf, die ein leichtgaengiges und einwandfreies Einfuehren des Rohrstueckes 4 in das Innere der Vorrichtung 1 erlauben.

Die Vorrichtung 1 sowie die Spannbacken 2 stehen mit einem Zahnkranz 7 in Wirkverbindung. Der Zahnkranz 7 kaemmt mit einem Zahnrad 8, welches ueber ein Getriebe 9 mit der Welle 10 eines Antriebsmotores 11 wirkverbunden ist. Der Motor 11 besteht in vorteilhafter Weise aus einem Gleichstrommotor, der ueber eine NC-Einrichtung der Werkzeugmaschine steuerbar ist. Dies erlaubt es, die Spann- und Drehvorrichtung 1 mit einer Drehgeschwindigkeit anzutreiben, die zur Durchfuehrung verschiedener Schneidvorgaenge ratsam sind.

Der Zahnkranz 7 ist mit einer Muffe 12 wirkverbunden. Die Muffe oder Huelse 12 ist ueber Kugellager 13 im Inneren des Gehaeuses 14 der Spann- und Drehvorrichtung 1 gelagert. Somit kann die Muffe 12 eine Drehbewegung durchfuehren.

In der drehbaren Muffe 12 ist eine weitere Huelse 15 gelagert, die neben einer Drehbewegung auch eine Axialbewegung durchfuehren kann, wie dies in Fig. 1 durch den Pfeil f angedeutet ist.

Das vordere Ende der Huelse 15 ist in an sich bekannter Weise mit den Backen 2 verbunden. Genauer gesagt stehen die Backen 2 mit geneigten Fuehrungsnuten 16, die in die Vorrichtung 1 eingearbeitet sind, in Wirkverbindung. Somit koennen die Backen 2 waehrend des Axialhubes der Huelse 15 in Radialrichtung angetrieben werden.

Bei Bewegung der Huelse 15 in Richtung des Pfeiles (g) wird ein Oeffnen der Spannbacken 2 bewirkt; bei Bewegung der Huelse 15 in entgegengesetzter Richtung erfolgt eine Schliessbewegung der Backen 2. Dieses Antriebssystem fuer die Backen 2 zum Spannen des Rohres 4 bedarf keiner genaueren Beschreibung, da die Antriebsverbindung zwischen Spannbacken und Huelse aus dem Stand der Technik bekannt ist.

Die Axialbewegung der Huelse 15 wird unter Zuhilfenahme einer hydraulischen Kolben-Zylindereinheit, die gesamthaft mit 17 gekennzeichnet ist, durchgefuehrt. Der Hydraulikzylinder 17 ist im Inneren des Gehaeuses 14 der Vorrichtung 1 angeordnet. Der Zylinder 17 ist als doppeltwirkender Zylinder ausgebildet und weist zwei Oeffnungen 18 und 19 fuer die Einspeisung bzw. die Abfuhr der unter Druck stehenden Hydraulikfluessigkeit auf. Der Zylinder 17 nimmt einen Kolben 20 auf, der in vorteilhafter Weise als Ringkolben ausgebildet ist. Dieser Ringkolben 20 arbeitet mit zwei Axiallagern 21 und 22 zusammen, die auf der Huelse oder Muffe 15 unter Verwendung von Anschlaegen und einer Ueberwurfmutter 23 befestigt sind. Die Lager 21 und 22 verhindern, dass der Kolben 20 verdreht wird, wenn durch die Huelse 15 eine Drehbewegung durchgefuehrt wird.

Der Hub des Kolbens 20 (Oeffnungsbewegung der Backen 2) wird an der Vorderseite der Vorrichtung 1 durch einen festen Anschlag 24 begrenzt, der im Inneren des Zylinders 14 vorgesehen ist. Wenn der Kolben 20 mit dem Anschlag 24 in Wirkverbindung tritt, hat die Muffe oder Huelse 15 ihren maximalen Hub in Richtung des Pfeiles (g) durchgefuehrt. Dieser Hub entspricht dem maximalen Oeffnungshub der Spannbacken 2.

Wird ueber ein bekanntes Elektroventil ueber die Oeffnung 18 die rueckwaertige Kammer des Zylinders 14 entleert und eine unter Druck stehende Hydraulikfluessigkeit ueber die Oeffnung 19 der vorderen Kammer des Zylinders 14 zugefuehrt, so wird der Kolben 20 nach rueckwaerts verfahren und zieht die Huelse 15 in entgegengesetzter Richtung zu der durch den Pfeil (g) angegebenen Richtung. Somit wird ueber die bekannte Einrichtung, bestehend aus geneigten Fuehrungen 16 und den dazugehoerigen Gleitzapfen, eine Schliessbewegung der Backen 2 und somit ein Spannen des Rohrstueckes 4 bewirkt. Um zu vermeiden, dass Rohre, besonders Rohre mit duenner Wand, durch die Spannbacken 2 verformt werden, ist es wichtig, eine Vorrichtung vorzusehen, die eine Begrenzung der von den Backen 2 auf das Rohr 4 uebertragenen Kraft ermoeglicht.

Erfindungsgemaess ist zu diesem Zweck vorgesehen, dass der Rueckwaertshub des Kolbens 20 und somit die Rueckwaertsbewegung der Muffe oder Huelse 15 durch eine Ringmutter 25 festgelegt wird. Die Mutter 25 weist an ihrer Aussenseite ein Gewinde 26 auf, das mit einer Gewindespindel 27, die ein Endlosgewinde aufweist, zusammenwirkt. Durch Betaetigen der Gewindespindel 27, z. B. ueber ein nicht dargestelltes Handrad, wird auch die Gewindemutter 25 angetrieben und ueber das Gewinde 127 in Axialrichtung verschoben. Mit einer Lageeinstellung des vorderen Endes 28 der Gewindemutter 25, die als Anschlag fuer den Ringzylinder 20 dient, wird der Hub des Kolbens 20 und somit der Huelse 15 genau festgelegt. Auf diese Weise kann der Schliesshub der Backen 2 mit Praezision festgelegt werden und eine genaue Dosierung der Spannkraft der Backen 2 erfolgen. Die Spannkraft der Backen 2, die auf das Rohr 4 einwirkt, wirdsomit dadurch eingestellt, dass zwar eine Mitnahme der Rohres 4 waehrend des Schneidvorganges durch die Lasereinrichtung erfolgt, es wird aber gleichzeitig vermieden, dass zu hohe Kraefte ueber die Spannbacken 2 auf die Aussenwand des Rohres uebertragen werden. Dadurch wird vermieden, dass eine Beschaedigung oder plastische Verformung der Rohrwand des Rohres 4 eintritt.

## Patentansprüche

1. Vorrichtung zum Spannen und Drehen rohrfoermiger Werkstuecke (4) in einer Werkzeugmaschine, bestehend aus einem Spannfutter (1), das ueber ein Zahngetriebe (7, 8) mit einem steuerbaren Motor (11) verbunden ist und das Spannfutter (1) mit Spannbacken (2) ausgeruestet ist, die in geneigten Fuehrungen (16) des Spannfutters (1) gelagert sind, und ueber ein Keilgetriebe zur Durchfuehrung einer Oeffnungs- oder Schliessbewegung durch Verschieben einer Huelse (15) zur Uebertragung einer Zug- oder Druckkraft verschiebbar sind, wobei die Huelse (15) mit einer Antriebsvorrichtung in Form eines ringfoermig ausgebildeten Kolbens (20), der die Huelse umgreift, wirkverbunden ist, und der Kolben (20) in einem ringfoermigen Zylinder (14) verschiebbar gelagert ist, sowie dem Kolben (20) im Inneren der Vorrichtung ein feststehender Anschlag (24) zur Festlegung der maximalen Oeffnungsbewegung zugeordnet ist, **dadurch gekennzeichnet**, dass dem Kolben eine in Laengsrichtung verstellbare Ringmutter (25) als einstellbarer Anschlag (28) zur Festlegung der maximalen Schliessbewegung zugeordnet ist, und die Mutter (25) ueber einen Zahnkranz (26) mit einer antreibbaren Gewindespindel (27) und ueber ein Gewinde (127) mit dem Zylindergehaeuse (14) in Wirkverbindung steht.

2. Vorrichtung nach Patentanspruch 1, **dadurch gekennzeichnet**, dass die Spannbacken (2) im Inneren der Spann- und Drehvorrichtung (1) mit Fuehrungsstangen (5) bestueckt sind.

3. Vorrichtung nach Patentanspruch 2, **dadurch gekennzeichnet**, dass die Fuehrungsstangen (5) zugespitzte Enden (6) zur Bildung eines Einlaufes fuer das einzufuehrende Rohrstueck aufweisen.

## Claims

1. Device for locking and rotating tubular workpieces (4) in a machine tool, comprising a chuck (1) connected through a gear mechanism (7, 8) with a controlled motor (11), wherein the chuck (1) is equipped with clamping means (2) supported in slanting guides (16) of the chuck (1) and wherein the clamping means (2) through a wedge mechanism are movable for the execution of an opening or a closing movement by shifting a sleeve (15) for the transmission of a traction force or a thrust force, wherein the sleeve (15) is coupled with an operating device having the form of an annular piston (20) which is surrounding the sleeve (15) and the piston is movably housed in an annular cylinder (20) and wherein to the piston (20) is associated in the interior of the device a fixed stop (24) for determining the maximum opening movement **characterized in that** with the piston is associated an annular nut (25) movable in the longitudinal direction and acting as a registrable stop (28) in order to determine the maximum of the closing movement and in that the nut (25) is connected through a crown gear (26) with a driven threaded shaft (27) and through a thread (127) with the housing (14) of the cylinder.

2. Device according to claim 1, **charaterized in that** the clamping means (2) supported in the interior of the locking and rotating device (1) are equipped with guiding rods (5).

3. Device according to claim 2, **characterized in that** the guiding rods (5) present pointed terminals (6) forming an entrance for the tubular piece to be introduced.

## Revendications

1. Dispositif de serrage et de tournage de pièces tubulaires (4) dans une machine-outil, comportant un mandrin de serrage (1) relié par une transmission par engrenage (7, 8) à un moteur réglabele (11) et le mandrin de serrage (1) étant muni des mâchoires de serrage (2), les mâchoires de serrage (2) étant logées dans des glissières de guidage (16) inclinées du mandrin de serrage (1) et déplaçables par un engrenage à clavette pour l' éxecution d'un mouvement d'ouverture ou de fermeture à l'aide d'un manchon (15) de transmission d'un éffort de pression et d'un éffort de traction, le manchon (15) coopérant avec un mécanisme de commande sous forme d' un piston (20) en forme d'anneau enveloppant le manchon (15), le piston (20) étant logé d'une manière déplaçable dans un cylindre (14) en forme d'anneau et le piston (20) étant attribué à une butée fixe à l'intérieur du dispositif aux fins de définir le mouvement d'ouverture maximale, **caractérisé en ce que** le piston est attribué à un écrou à anneau (25) déplaçable en longueur comme butée réglable (28) pour définir le mouvement de fermeture maximale et l'écrou à anneau (25) coopère avec le corps du cylindre (14) par une jante dentée (26) avec une broche filetée (27) actionnable et par un filetage (127).

2. Dispositif selon la revendication 1, **caractérisé en ce que** les mâchoires de serrage (2) sont munies de tiges conductrices (5) à l'intérieur du dispositif de serrage et de tournage.

3. Dispositif selon la revendication 2, **caractérisé en ce que** les tiges conductrices (5) présentent des bouts (6) pointus aux fins de former un guidage d'entrée pour la pièce annulaire.
